# EUROPEAN PATENT APPLICATION

(11) **EP 4 834 547 A1**
(43) Date of publication of application: **04.11.2026**
(21) Application number: 24913002.2
(22) Date of filing: 26.12.2024
(51) Int. Cl.: B26D 3/00, B29C 39/02, B29C 39/22, G02B 1/04, G02B 3/00

(54) **METHOD FOR MANUFACTURING OPTICAL RESIN WAFER**

(30) Priority: 27.12.2023 JP 2023221606
(71) Applicant: Mitsui Chemicals, Inc., Tokyo 104-0028 (JP)
(72) Inventor: KAMIO, Hiroyuki, Tokyo 104-0028 (JP); MURAMATSU, Akihiro, Tokyo 104-0028 (JP)
(74) Representative: Hoffmann Eitle
(86) International application number: PCT/JP2024/046148
(87) International publication number: WO 2025/143116

(57) **Abstract**

Provided is a method for manufacturing an optical resin wafer, in which productivity is improved. A productivity of a method for manufacturing an optical resin wafer can be improved by a method for manufacturing an optical resin wafer, which includes an ingot preparation step of preparing an optical resin ingot and a cutting step of cutting the optical resin ingot with a blade to obtain an optical resin wafer precursor.

## Description

### TECHNICAL FIELD

The present invention relates to a method for manufacturing an optical resin wafer.

### BACKGROUND ART

In the field of optical devices, there is a demand for a resin material for reasons such as weight reduction and improvement of impact resistance.

Patent Document 1 discloses an optical member including an organic polymer, having an area of 1 mm² or more, and including a surface A in which, in a case where a flatness of a region having an area of 1 mm² is measured with a non-contact optical flatness gauge, the flatness is 80 µm or less. In addition, Patent Document 1 describes that "an object of the present disclosure is to provide an optical member which is lightweight and capable of transmitting optical information with high accuracy, a method for manufacturing the optical member, and an optical information transmission device including the optical member".

### RELATED DOCUMENT

### PATENT DOCUMENTS

Patent Document 1: Pamphlet of International Publication No. WO 2020/170801

### SUMMARY OF THE INVENTION

### TECHNICAL PROBLEM

As a method for manufacturing an optical resin wafer with a resin material, a method of casting a resin material into a mold is known. However, the production with such a mold has room for improvement in terms of productivity.

The present invention provides a method for manufacturing an optical resin wafer with improved productivity.

### SOLUTION TO PROBLEM

According to the present invention, the following method for manufacturing an optical resin wafer is provided.
1. A method for manufacturing an optical resin wafer, including an ingot preparation step of preparing an optical resin ingot, and a cutting step of cutting the optical resin ingot with a blade to obtain an optical resin wafer precursor.
2. The method for manufacturing an optical resin wafer according to 1., in which the cutting in the cutting step is performed using at least one selected from the group consisting of a wire saw and a blade saw.
3. The method for manufacturing an optical resin wafer according to 2., in which the cutting in the cutting step is performed using a multi-wire saw or a multi-blade saw, and a plurality of optical resin wafer precursors are obtained at once.
4. The method for manufacturing an optical resin wafer according to any one of 1. to 3., in which a temperature of a cut portion of the optical resin ingot in the cutting step is a temperature of (Tgᵢ - 20)°C or lower, where Tgᵢ is a glass transition temperature of a resin of the optical resin ingot.
5. The method for manufacturing an optical resin wafer according to 4., in which the temperature of the cut portion of the optical resin ingot in the cutting step is 0°C or higher.
6. The method for manufacturing an optical resin wafer according to any one of 1. to 5., in which the optical resin ingot in the cutting step is mounted to a mounting table by an adhesive.
7. The method for manufacturing an optical resin wafer according to 6., in which peeling of the optical resin wafer precursor or the optical resin ingot mounted to the mounting table is performed by reducing an adhesion force of the adhesive with an external stimulus.
8. The method for manufacturing an optical resin wafer according to any one of 1. to 7., further including a processing step of performing, on the optical resin wafer precursor, at least one type of processing selected from the group consisting of notch processing, burr processing, beveling processing, cutting processing, grinding processing, polishing processing, and heat treatment to obtain an optical resin wafer.
9. The method for manufacturing an optical resin wafer according to any one of 1. to 8., in which the optical resin wafer contains at least one selected from the group consisting of a (thio)urethane-based optical resin, an epoxy-based optical resin, a polycarbonate-based optical resin, an episulfide-based optical resin, an allyl carbonate-based optical resin, a nylon-based optical resin, a polyamide-based optical resin, and a polyimide-based optical resin.
10. The method for manufacturing an optical resin wafer according to any one of 1 to 9, in which a refractive index of the optical resin wafer is 1.47 or more.
11. The method for manufacturing an optical resin wafer according to any one of 1. to 10., in which a curing shrinkage rate A of a curable composition, which is a raw material of the optical resin ingot, calculated by Equation (x) is 15% or less.$A = \left({V}_{0} - {V}_{1}\right) {/ V}_{0} \times 100$ (X)
   A: curing shrinkage rate [%]
   V₀: volume of the curable composition (before curing)
   V₁: volume of the optical resin ingot (after curing)
12. The method for manufacturing an optical resin wafer according to any one of 1 to 11, in which an average thickness of the optical resin wafer is 0.1 mm to 3.0 mm.
13. The method for manufacturing an optical resin wafer according to any one of 1 to 12, in which a diameter of the optical resin wafer is 50 mm to 350 mm.
14. The method for manufacturing an optical resin wafer according to any one of 1 to 13, in which a flatness of the optical resin wafer is 350 µm or less.

### ADVANTAGEOUS EFFECTS OF INVENTION

According to the present invention, it is possible to provide a method for manufacturing an optical resin wafer with improved productivity.

### BRIEF DESCRIPTION OF THE DRAWINGS

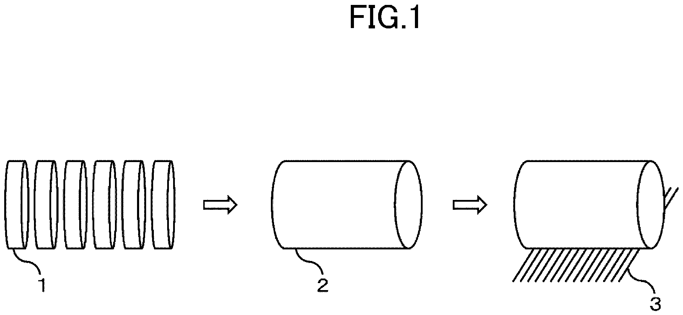

[FIG. 1] FIG. 1 is a schematic diagram showing an example of a method for manufacturing an optical resin wafer according to the present embodiment.
[FIG. 2] FIG. 2 is a schematic diagram showing an example of the method for manufacturing an optical member of the present embodiment.
[FIG. 3] FIG. 3 is a schematic cross section diagram showing an example of an optical information transmission device using an optical member of the present embodiment.

### DESCRIPTION OF EMBODIMENTS

Hereinafter, the present invention will be described with reference to embodiments.

### 1. Method for manufacturing optical resin wafer

Hereinafter, a method for manufacturing an optical resin wafer according to the present embodiment will be described.
is a view schematically showing an example of a step flow of the method for manufacturing an optical resin wafer according to the present embodiment.

The method for manufacturing an optical resin wafer according to the present embodiment includes an ingot preparation step of preparing an optical resin ingot 2 and a cutting step of cutting the optical resin ingot 2 according to the present embodiment with a blade to obtain an optical resin wafer precursor.

The method for manufacturing an optical resin wafer according to the present embodiment includes, for example, an ingot preparation step (hereinafter, may be abbreviated as "ingot preparation step") of connecting a plurality of optical resin molded bodies 1 to prepare an optical resin ingot 2, and a cutting step (hereinafter, may be abbreviated as "cutting step") of cutting the optical resin ingot 2 with a multi-wire saw 3 to obtain a plurality of optical resin wafer precursors at once. In addition, although a slight increase in cutting loss occurs, a multi-blade saw, an outer peripheral blade horizontal grinding apparatus, or an inner peripheral blade grinding apparatus may be used instead of the multi-wire saw.

As a result of intensive studies on the productivity of the optical resin wafer, the present inventors have found that the productivity is dramatically improved as compared with a manufacturing method in which a wafer is molded one by one in a mold by preparing an optical resin as an ingot and cutting the ingot with a blade.

In the present embodiment, for example, a plurality of optical resin molded bodies 1 made of a thiourethane-based optical resin are connected to prepare an optical resin ingot 2. In the ingot preparation step, even in a case where a specific work is not performed, the optical resin ingot can be regarded as being prepared as long as the optical resin ingot can be used in the cutting step.

The prepared optical resin ingot 2 is mounted to a mounting table (not shown) in a device including a multi-wire saw 3 by a hot-melt epoxy adhesive (not shown), and the mounted optical resin ingot 2 is cut with the multi-wire saw 3 to obtain a plurality of optical resin wafer precursors at once. For example, the temperature of the cut portion of the optical resin ingot during cutting is controlled to a temperature of (Tgᵢ - 20) °C or lower and 0°C or higher, where Tgᵢ is the glass transition temperature of the thiourethane-based optical resin.

The optical resin wafer precursor mounted to the mounting table is heated to, for example, a temperature of equal to or higher than the melting temperature of the hot-melt epoxy adhesive and equal to or lower than the glass transition temperature (Tgᵢ - 10) °C of the thiourethane-based optical resin, and is peeled off from the mounting table.

For example, burr processing of removing a "burr" remaining on an outer periphery and notch processing of forming a notch at an end portion of the obtained optical resin wafer precursor are performed on the obtained optical resin wafer precursor, and an optical resin wafer made of a (thio)urethane-based optical resin is obtained. An orientation flat may be used instead of the notch.

The obtained optical resin wafer precursor is subjected to, for example, burr processing of removing "burr" remaining on the outer periphery, notch processing of forming a notch at an end portion of the optical resin wafer precursor, polishing processing of polishing the surface of the optical resin wafer precursor, and heat treatment of heating the optical resin wafer precursor, and an optical resin wafer is obtained.

The method of preparing the optical resin ingot in the ingot preparation step of the present embodiment is not particularly limited, and the optical resin ingot may be manufactured by the user or may be obtained from another person. The production method in a case of manufacturing the optical resin ingot is also not particularly limited, and examples thereof include a method of casting a curable composition serving as a raw material of the optical resin wafer into a mold for manufacturing an ingot and curing the curable composition to obtain an optical resin ingot.

The cutting method in the cutting step of the present embodiment is not particularly limited, but is preferably performed using at least one selected from the group consisting of a wire saw and a blade saw. As a result, it is possible to obtain an optical resin wafer precursor in which the variation in thickness is suppressed, and thus it is possible to improve the accuracy of polishing in the polishing step, and as a result, it is possible to further improve the smoothness of the optical resin wafer.

In addition, the cutting method in the cutting step of the present embodiment is not particularly limited, but is preferably performed using a multi-wire saw or a multi-blade saw to obtain a plurality of optical resin wafer precursors at once, and particularly preferably performed using a multi-wire saw to obtain a plurality of optical resin wafer precursors at once. As a result, a plurality of optical resin wafer precursors in which the variation in thickness is suppressed can be obtained at once, and the thicknesses can be aligned to the minimum required processing allowance, and thus the manufacture efficiency of the optical resin wafer can be further improved.

The cutting conditions and the like in the cutting step of the present embodiment are not particularly limited, but from the viewpoint of suppressing the softening of the optical resin wafer, the temperature of the cut portion of the optical resin ingot is preferably controlled to a temperature of (Tgᵢ - 20)°C or lower, more preferably controlled to a temperature of (Tgᵢ - 30) °C or lower, and still more preferably controlled to a temperature of (Tgᵢ - 40) °C or lower, where Tgᵢ is the glass transition temperature of the resin of the optical resin ingot. In addition, the temperature of the cut portion of the optical resin ingot is preferably controlled to a temperature of 0°C or higher. Examples of the method of controlling the temperature of the cut portion of the optical resin ingot include a method of controlling the temperature using a wafer cutting slurry.

The other conditions in the cutting step of the present embodiment are not particularly limited, but it is preferable that the optical resin ingot is mounted to a mounting table by an adhesive and cut. As a result, it is possible to suppress the positional deviation of the optical resin ingot in the cutting step, and it is possible to manufacture an optical resin wafer with high quality.

The peeling of the optical resin wafer precursor mounted to the mounting table by the adhesive is preferably performed by reducing the adhesion force of the adhesive by an external stimulus, and examples of the external stimulus include heat, light, and dissolution (by a solvent, organic or water). When the adhesion force of the adhesive can be reduced by heat or light, the peeling of the optical resin wafer precursor can be easily performed, and an unnecessary force is not applied to the optical resin wafer during the peeling, so that the deformation of the optical resin wafer during the peeling is suppressed. The type of light for reducing the adhesion force of the adhesive is, for example, ultraviolet rays, visible light, or infrared rays, and is preferably ultraviolet rays. By setting the type of light to ultraviolet rays, the adhesion force can be reduced by irradiation for a short time, and the temperature rise of the irradiated portion can be suppressed.

As the adhesive of the present embodiment, for example, a so-called hot-melt type adhesive that softens by heating and thus the adhesion force is reduced is preferable, and specific examples of the material include an epoxy-based adhesive, an ethylene-vinyl acetate copolymer-based adhesive, an olefin-based adhesive, an elastomer-based adhesive, a polyurethane-based adhesive, a polyamide-based adhesive, and a polyester-based adhesive. From the viewpoint of adhesive strength, a hot-melt epoxy-based adhesive is particularly preferable. Examples of the hot-melt epoxy-based adhesive include an aqua wax water-washable type manufactured by NIKKA SEIKO Co., Ltd.

The melting temperature of the adhesive of the present embodiment is preferably (Tg of the optical resin ingot - 10)°C or lower, more preferably (Tg of the optical resin ingot - 20)°C or lower, still more preferably (Tg of the optical resin ingot - 25) °C or lower, and even more preferably (Tg of the optical resin ingot - 30) °C or lower.

The peeling of the optical resin wafer precursor mounted to the mounting table may be performed by cutting the mounted portion of the optical resin wafer precursor and the mounting table.

The present embodiment preferably includes a processing step of performing at least one type of processing selected from the group consisting of notch processing, burr processing, beveling processing, cutting processing, grinding processing, polishing processing, and heat treatment to obtain an optical resin wafer.

The notch processing is processing of forming a notch, and in the optical resin wafer, the notch serves as a mark indicating the orientation. A device, conditions, and the like used for the notch processing are not particularly limited, and the processing can be performed by appropriately adopting known devices, conditions, and the like.

The burr processing is a step of removing burrs (irregularities) such as protrusions generated on the outer periphery of the optical resin wafer precursor. A device, conditions, and the like used for the burr processing are not particularly limited, and the processing can be performed by appropriately adopting known devices, conditions, and the like.

The beveling processing is a step of scraping off the corners of the outer periphery of the optical resin wafer precursor and rolling (chamfering) the optical resin wafer precursor in the thickness direction. A device, conditions, and the like used for the beveling processing are not particularly limited, and the processing can be performed by appropriately adopting known devices, conditions, and the like.

The grinding processing is a step of grinding the surface of the optical resin wafer precursor to ensure flatness and the like. In addition, the polishing processing is a step of polishing the surface of the optical resin wafer precursor to ensure flatness and the like. The methods, conditions, and the like of the grinding processing and the polishing processing are not particularly limited, and for example, the methods described in paragraphs 0047 to 0062 of WO2020/170801 can be appropriately adopted. As a result, the thickness variation of the optical resin wafer can be further reduced, and the planarity and smoothness can be further improved.

The heat treatment is a step of heating a cured product for the purpose of relaxing the internal stress of the optical resin wafer precursor. By heating, the movement of the molecules constituting the optical resin wafer precursor is activated, and the distortion of the optical resin wafer precursor is removed, whereby the optical resin wafer can be flattened.

From the viewpoint of further flattening the optical resin wafer, the heating temperature in the heat treatment is preferably 60°C or higher, more preferably 70°C or higher, still more preferably 80°C or higher, even still more preferably 90°C or higher, and even still more preferably 100°C or higher, and when the glass transition temperature (Tg) of the optical resin which is a raw material of the optical resin wafer is used as a reference, the heating temperature is preferably Tg - 20°C or higher, more preferably Tg - 10°C or higher, still more preferably Tg or higher, even still more preferably Tg + 10°C or higher, even still more preferably Tg + 20°C or higher, even still more preferably Tg + 30°C or higher, even still more preferably Tg + 40°C or higher, and even still more preferably Tg + 50°C or higher, and when the thermal deterioration of the optical resin wafer is within an allowable range, the heating temperature may be, for example, 200°C or lower. In a case of determining the heat treatment temperature, the temperature dependence of the storage elastic modulus and the loss elastic modulus may be referred to by viscoelasticity measurement. In the heat treatment, from the viewpoint of further suppressing warping, the pressurization may be further performed. Specifically, the optical resin wafer according to the present embodiment may be pressurized by sandwiching the optical resin wafer between flat plates and pressing.

From the viewpoint of improving the optical characteristics, the material of the optical resin wafer manufactured in the present embodiment preferably includes at least one selected from the group consisting of a (thio)urethane-based optical resin, an epoxy-based optical resin, a polycarbonate-based optical resin, an episulfide-based optical resin, an allyl carbonate-based optical resin (preferably a diallyl carbonate-based optical resin), a nylon-based optical resin, a polyamide-based optical resin, and a polyimide-based optical resin, more preferably includes a (thio)urethane-based optical resin, and particularly preferably includes a thiourethane resin.

The components of the curable composition used in the present embodiment are appropriately selected according to the material of the target optical resin wafer, but in a case where the material of the target optical resin wafer is a (thio)urethane-based optical resin, the components can be obtained by polycondensing an isothiocyanate compound and a bi- or higher functional active hydrogen compound (for example, a polythiol compound, a polyol compound, or the like).

Examples of the isothiocyanate compound used in the curable composition of the present embodiment include hexamethylene diisocyanate, pentamethylene diisocyanate, xylylene diisocyanate, isophorone diisocyanate, bis(isocyanatomethyl)cyclohexane, bis(isocyanatocyclohexyl)methane, 2,5-bis(isocyanatomethyl)bicyclo-[2.2.1]-heptane, 2,6-bis(isocyanatomethyl)bicyclo-[2.2.1]-heptane, toluene diisocyanate, phenylene diisocyanate, and 4,4'-diphenylmethane diisocyanate.

Specific examples of the polythiol compound include pentaerythritol tetrakis(2-mercaptoacetate), pentaerythritol tetrakis(3-mercaptopropionate), bis(2-mercaptoethyl)sulfide, 4-mercaptomethyl-1,8-dimercapto-3,6-dithiaoctane, 5,7-dimercaptomethyl-1,11-dimercapto-3,6,9-trithiaundecane, 4,7-dimercaptomethyl-1,11-dimercapto-3,6,9-trithiaundecane, 4,8-dimercaptomethyl-1,11-dimercapto-3,6,9-trithiaundecane, 2,5-dimercaptomethyl-1,4-dithiane, 1,1,3,3-tetrakis(mercaptomethylthio)propane, 4,6-bis(mercaptomethylthio)-1,3-dithiane, 2-(2,2-bis(mercaptomethylthio)ethyl)-1,3-dithiethane, ethylene glycol bis(3-mercaptopropionate), and the like.

Examples of the polyol compound include linear or branched aliphatic alcohols such as ethylene glycol, diethylene glycol, triethylene glycol, propylene glycol, dipropylene glycol, tripropylene glycol, 1,3-propanediol, 2,2-dimethyl-1,3-propanediol, 2,2-diethyl-1,3-propanediol, 1,2-butanediol, 1,3-butanediol, 1,4-butanediol, 3-methyl-1,3-butanediol, 1,2-pentanediol, 1,3-pentanediol, 1,5-pentanediol, 2,4-pentanediol, 2-methyl-2,4-pentanediol, 3-methyl-1,5-pentanediol, 1,6-hexanediol, 2,5-hexanediol, glycerol, diglycerol, polyglycerol, trimethylolpropane, pentaerythritol, and di(trimethylolpropane); and alicyclic alcohols such as 1,2-cyclopentanediol, 1,3-cyclopentanediol, 3-methyl-1,2-cyclopentanediol, 1,2-cyclohexanediol, 1,3-cyclohexanediol, 1,4-cyclohexanediol, 4,4'-bicyclohexanol, and 1,4-cyclohexanedimethanol.

The average thickness of the optical resin wafer manufactured in the present embodiment can be appropriately adjusted according to the use of the optical resin wafer, but is preferably 0.1 mm or more, more preferably 0.2 mm or more, and still more preferably 0.3 mm or more, and is preferably 3.0 mm or less, more preferably 2.0 mm or less, and still more preferably 1.0 mm or less. The average thickness of the optical resin wafer manufactured in the present embodiment is an arithmetic average of the thickness at a point 5 mm from the end part of the hole of the optical resin wafer toward the outer peripheral portion and the thickness at a point 5 mm from the outer peripheral portion of the optical resin wafer toward the central portion.

The diameter of the optical resin wafer manufactured in the present embodiment can be appropriately adjusted according to the use of the optical resin wafer, but from the viewpoint of acquiring a larger number of optical members from one optical resin wafer, the diameter is preferably 50 mm or more, more preferably 70 mm or more, still more preferably 80 mm or more, even still more preferably 100 mm or more, even still more preferably 120 mm or more, and even still more preferably 140 mm or more, and may be, for example, 350 mm or less.

Here, as the diameter of the optical resin wafer increases, the force with which the resin composition is attracted to the central portion in the cavity space of the mold due to the curing shrinkage of the resin composition increases, and the planarity of the optical resin wafer is likely to decrease. However, according to the present embodiment, the planarity can be improved even in a case where the diameter of the optical resin wafer is equal to or larger than the above-described lower limit value.

The optical resin wafer manufactured in the present embodiment may be required to improve flatness and smoothness and reduce thickness variation due to the use as a material for an optical product. The preferred ranges of Bow, which is an index of the flatness required for the optical resin wafer manufactured in the present embodiment, TTV, which is an index of the thickness variation, and surface roughness Ra, which is an index of the smoothness, are, for example, as follows.

The flatness of the optical resin wafer manufactured in the present embodiment is preferably 350 µm or less, more preferably 300 µm or less, still more preferably 250 µm or less, even still more preferably 200 µm or less, even still more preferably 150 µm or less, even still more preferably 100 µm or less, even still more preferably 50 µm or less, even still more preferably 40 µm or less, and even still more preferably 30 µm or less, and may be, for example, 0.01 µm or more, 0.1 µm or more, 1 µm or more, or 10 µm or more.

The flatness/tabularity of the optical resin wafer manufactured in the present embodiment is, for example, Bow of the optical resin wafer, and can be measured by an ultra-high-precision three-dimensional measuring machine. For example, the measurement can be performed under the following conditions. In the present embodiment, Bow is an amount representing the distance from the reference surface at the center of the wafer when the wafer is held in a natural state without being vacuum-sucked.
Device: UA3P (manufactured by Panasonic Production Engineering Co., Ltd.)
Measurement region: circular region of ±30 mm in each of X and Y directions from the center of the optical resin wafer

In addition, the difference (PV) between the maximum and minimum values of the measurement or WARP may be simply used as an index.

The thickness variation TTV of the optical resin wafer manufactured in the present embodiment is preferably 10 µm or less, more preferably 5 µm or less, still more preferably 2 µm or less, and even still more preferably 1 µm or less, and the lower limit value of the thickness variation TTV is not particularly limited, but is, for example, 0.01 µm or more, or may be 0.1 µm or more. In the present embodiment, TTV is the difference between the maximum value and the minimum value of the thickness (distance from the back surface reference plane) when the wafer is adsorptively fixed.

The surface roughness Ra of the optical resin wafer manufactured in the present embodiment is preferably 10 nm or less, more preferably 5 nm or less, still more preferably 2 nm or less, and even still more preferably 1 nm or less, and the lower limit value of the surface roughness Ra is not particularly limited, but is, for example, 0.01 nm or more, or may be 0.1 nm or more. The surface roughness Ra of the optical resin wafer can be determined by measurement in accordance with Japanese Industrial Standards JIS B 0601:2013.

From the viewpoint of being able to reduce the thickness of the optical resin wafer while improving the optical characteristics of the optical resin wafer, the refractive index of the optical resin wafer manufactured in the present embodiment is preferably 1.47 or more, more preferably 1.49 or more, still more preferably 1.51 or more, and even still more preferably 1.53 or more, and may be, for example, 1.90 or less, for example, 1.80 or less, or for example, 1.70 or less. The refractive index of the optical resin wafer can be determined by measurement in accordance with Japanese Industrial Standards JIS K-0062:1992 at a temperature of 25°C and a wavelength of 587.6 nm.

From the viewpoint of being able to further flatten the optical resin wafer, in the optical resin wafer manufactured in the present embodiment, the curing shrinkage rate A of the curable composition, which is a raw material of the optical resin ingot calculated by Equation (x), is preferably 15% or less, more preferably 10% or less, and still more preferably 5% or less. The curing shrinkage rate A of the optical resin wafer can be determined by measurement in accordance with Japanese Industrial Standards JIS K-6941-2-4:2014. $A = \left({V}_{0}-{V}_{1}\right) / {V}_{0} \times 100 \left(x\right)$
A: curing shrinkage rate [%]
V₀: volume of curable composition (before curing)
V₁: volume of optical resin ingot (after curing)

A linear expansion coefficient a_{w} of the optical resin wafer manufactured in the present embodiment is preferably 10 × 10⁻⁶/°C or more, more preferably 20 × 10⁻⁶/°C or more, still more preferably 30 × 10⁻⁶/°C or more, and even more preferably 40 × 10⁻⁶/°C or more, and is preferably 250 × 10⁻⁶/°C or less, more preferably 200 × 10⁻⁶/°C or less, still more preferably 150 × 10⁻⁶/°C or less, even more preferably 100 × 10⁻⁶/°C or less, and even still more preferably 80 × 10⁻⁶/°C or less. As a result, the planarity of the optical resin wafer can be further improved. a_{w} is measured under conditions of a temperature rising rate of 5 °C/min from 25°C to 150°C according to Japanese Industrial Standards JIS K-7197:2012.

In a case where the optical resin wafer is subjected to a precision machining process (patterning or the like) in which the optical resin wafer is combined with an inorganic material, a laminate is formed, and a heat treatment is performed, the coefficient of linear expansion a_{w} of the optical resin wafer is generally preferably small in order to reduce the influence of thermal expansion. In this case, the coefficient of linear expansion a_{w} is preferably 30 × 10⁻⁶/°C or less, more preferably 20 × 10⁻⁶/°C or less, still more preferably 10 × 10⁻⁶/°C or less, and even still more preferably 1 × 10⁻⁶/°C or less.

In addition, in a case where fine processing (VHG, VBG, or the like) using a hologram is performed, since the organic material is combined with the hologram or a laminate is formed, it is preferable that the coefficient of linear expansion of the organic material to be laminated is close to the coefficient of linear expansion of the hologram. As a result, it is expected to suppress the occurrence of warping during or after processing, to suppress the occurrence of warping due to a temperature change of the processed body, or to improve the processing accuracy during or after processing.

The curing conditions in the curing step of the present embodiment should be appropriately selected according to the material of the target optical resin wafer, but from the viewpoint of suppressing thermal runaway or convection due to reaction heat, when the glass transition temperature (Tg) of the optical resin, which is a raw material of the optical resin wafer, is used as a reference, the curing temperature is preferably (Tg) + 10°C or higher, more preferably (Tg) + 15°C or higher, and still more preferably (Tg) + 20°C or higher, and is preferably (Tg) + 40°C or lower, more preferably (Tg) + 35°C or lower, and still more preferably (Tg) + 30°C or lower.

In addition, specific examples of the curing temperature include 110°C to 140°C.

From the viewpoint of suppressing thermal runaway or convection due to reaction heat, the temperature rising time in the curing step of the present embodiment is preferably 1 hour or more, more preferably 1.1 hours or more, still more preferably 1.2 hours or more, even still more preferably 1.8 hours or more, even still more preferably 1.9 hours or more, and even still more preferably 2 hours or more.

In a case where the amount of the optical resin is large, the temperature rising time may be 12 hours or longer, 14 hours or longer, 16 hours or longer, 20 hours or longer, 22 hours or longer, or 24 hours or longer.

In a case where the amount of the optical resin is further large, the temperature rising time may be 24 hours or longer, 26 hours or longer, 28 hours or longer, 44 hours or longer, 46 hours or longer, or 48 hours or longer.

From the viewpoint of suppressing thermal runaway or convection due to reaction heat, the holding time of the curing temperature in the curing step of the present embodiment is preferably 1 hour or more, more preferably 1.1 hours or more, still more preferably 1.2 hours or more, even still more preferably 1.8 hours or more, even still more preferably 1.9 hours or more, and even still more preferably 2 hours or more.

From the viewpoint of reducing unreacted substances, the cooling time in the curing step of the present embodiment is preferably 1 hour or more, more preferably 1.1 hours or more, still more preferably 1.2 hours or more, even still more preferably 1.8 hours or more, even still more preferably 1.9 hours or more, and even still more preferably 2 hours or more.

In a case where the amount of the optical resin is large, the temperature decreasing time may be 12 hours or longer, 14 hours or longer, 16 hours or longer, 20 hours or longer, 22 hours or longer, or 24 hours or longer.

In a case where the amount of the optical resin is further large, the temperature decreasing time may be 24 hours or longer, 26 hours or longer, 28 hours or longer, 44 hours or longer, 46 hours or longer, or 48 hours or longer.

The optical resin wafer manufactured in the present embodiment can be used, for example, in an optical information transmission device. Examples of the optical information transmission device include a wearable display that displays virtual reality (VR), augmented reality (AR), and the like.

In a case where the optical resin wafer manufactured in the present embodiment is used in an optical information transmission device, the improvement of the planarity and smoothness of the optical resin wafer and the reduction of the thickness variation are further required as compared with a case where the optical resin wafer is used for other applications. As described above, according to the present embodiment, it is possible to obtain a wafer in which the planarity and smoothness are improved and the thickness variation is reduced, and thus the optical resin wafer obtained by the present embodiment is suitable for the application to the optical information transmission device.

### 2. Optical Resin Wafer

Hereinafter, the optical resin wafer according to the present embodiment will be described.

The optical resin wafer of the present embodiment is obtained by the method for manufacturing an optical resin wafer of the present embodiment.

### 3. Method for Manufacturing Optical Member

Hereinafter, the method for manufacturing an optical member according to the present embodiment will be described.

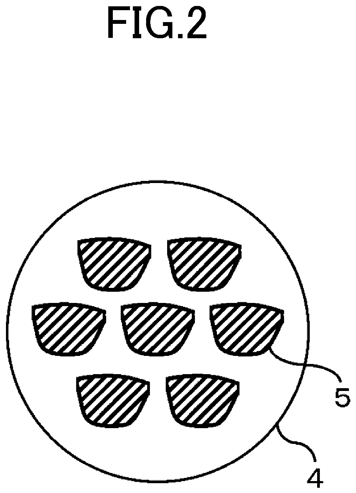

FIG. 2 is a diagram schematically showing an example of the method for manufacturing an optical member of the present embodiment.

The method for manufacturing an optical member according to the present embodiment includes a step of obtaining a plurality of optical members 5 from the optical resin wafer 4 according to the present embodiment.

The optical member 5 according to the present embodiment may be, for example, an optical lens, a light guide plate, a filter, or an optical switch.

### 4. Optical Member

Hereinafter, the optical member according to the present embodiment will be described.

The optical member according to the present embodiment is obtained by the method for manufacturing an optical member according to the present embodiment.

The optical member according to the present embodiment can be used, for example, in an optical information transmission device. The optical information transmission device is as described above.

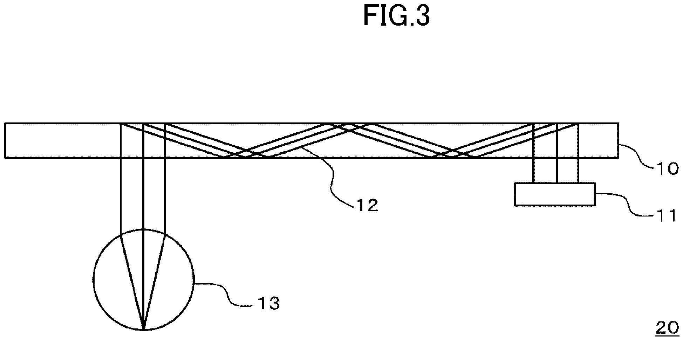

An optical information transmission device using the optical member of the present embodiment will be described with reference to FIG. 3. The optical information transmission device 20 includes the light irradiation unit 11 and the optical member 10 according to the present embodiment. The light 12 generated from the light irradiation unit 11 is reflected by the optical member 10 according to the present embodiment, and the reflected light is emitted to the eyes 13 of the user. As a result, the light emitted from the light irradiation unit 11 is recognized by the user wearing the optical information transmission device 20.

Although the embodiments of the present invention have been described above, these are merely examples of the present invention, and various configurations other than the above can be adopted. In addition, the present invention is not limited to the embodiments described above and modifications, improvements, and the like are included in the present invention in a range in which it is possible to achieve the object of the present invention.

This application claims priority based on Japanese Patent Application No. 2023-221606 filed on December 27, 2023, the entirety of the disclosure of which is incorporated herein.

The present invention may also take the following aspects.
[1] A method for manufacturing an optical resin wafer, the method including a step A of cutting an optical resin ingot with a cutting method using a blade to obtain a plurality of optical resin wafer precursors.
[2] The method for manufacturing an optical resin wafer according to [1], in which the cutting method includes at least one cutting method selected from a wire saw and a blade saw.
[3] The method for manufacturing an optical resin wafer according to [1] or [2], further including a step B of polishing the optical resin wafer precursor.
[4] The method for manufacturing an optical resin wafer according to [1] or [2], in which the optical resin ingot is mounted to a mounting table by a mounting agent.
[5] The method for manufacturing an optical resin wafer according to [4], further including a step C of applying an external stimulus to reduce a mounting force of the mounting agent and peeling the optical resin wafer precursor from the mounting table.
[6] The method for manufacturing an optical resin wafer according to [1] or [2], in which in the step A, the optical resin ingot is cut by at least one cutting method selected from a multi-wire saw consisting of a plurality of wires and a multi-blade saw consisting of a plurality of blades to simultaneously obtain a plurality of optical resin wafer precursors.
[7] The method for manufacturing an optical resin wafer according to [1] or [2], in which in the step A, in a case where a glass transition temperature of the optical resin ingot is denoted by T, a temperature of a cut portion is (T - 20) °C or lower.
[8] The method for manufacturing an optical resin wafer according to [1] or [2], in which in the step A, a temperature of a cut portion is 0°C or higher.
[9] The method for manufacturing an optical resin wafer according to [1] or [2], in which the optical resin wafer includes one or two or more selected from the group consisting of a (thio)urethane-based optical resin, an epoxy-based optical resin, a polycarbonate-based optical resin, an episulfide-based optical resin, an allyl carbonate-based optical resin, a nylon-based optical resin, a polyamide-based optical resin, and a polyimide-based optical resin.
[10] The method for manufacturing an optical resin wafer according to [1] or [2], in which a thickness of the optical resin wafer is 0.1 mm or more and 3.0 mm or less.
[11] The method for manufacturing an optical resin wafer according to [1] or [2], in which a diameter of the optical resin wafer is 50 mm or more and 350 mm or less.
[12] The method for manufacturing an optical resin wafer according to [1] or [2], in which a flatness of the optical resin wafer is 350 µm or less.
[13] The method for manufacturing an optical resin wafer according to [1] or [2], in which a refractive index of the optical resin wafer at a temperature of 25°C and a wavelength of 587.6 nm in accordance with JIS K-0062:1992 is 1.47 or more.
[14] The method for manufacturing an optical resin wafer according to [1] or [2], further including a step E of flattening the optical resin wafer by heating.

### REFERENCE SIGNS LIST

- 1: optical resin molded body
- 2: optical resin ingot
- 3: multi-wire saw
- 4: optical resin wafer
- 5: optical member
- 10: optical member
- 11: light irradiation unit
- 12: light
- 13: eyes
- 20: optical information transmission device

## Claims

1. A method for manufacturing an optical resin wafer, comprising:
an ingot preparation step of preparing an optical resin ingot; and
a cutting step of cutting the optical resin ingot with a blade to obtain an optical resin wafer precursor.

2. The method for manufacturing an optical resin wafer according to Claim 1,
wherein the cutting in the cutting step is performed using at least one selected from the group consisting of a wire saw and a blade saw.

3. The method for manufacturing an optical resin wafer according to Claim 2,
wherein the cutting in the cutting step is performed using a multi-wire saw or a multi-blade saw, and a plurality of optical resin wafer precursors are obtained at once.

4. The method for manufacturing an optical resin wafer according to Claim 1,
wherein a temperature of a cut portion of the optical resin ingot in the cutting step is a temperature of (Tgᵢ - 20)°C or lower, where Tgᵢ is a glass transition temperature of a resin of the optical resin ingot.

5. The method for manufacturing an optical resin wafer according to Claim 4,
wherein the temperature of the cut portion of the optical resin ingot in the cutting step is 0°C or higher.

6. The method for manufacturing an optical resin wafer according to Claim 1,
wherein the optical resin ingot in the cutting step is mounted to a mounting table by an adhesive.

7. The method for manufacturing an optical resin wafer according to Claim 6,
wherein peeling of the optical resin wafer precursor or the optical resin ingot mounted to the mounting table is performed by reducing an adhesion force of the adhesive with an external stimulus.

8. The method for manufacturing an optical resin wafer according to Claim **1,** further comprising:
a processing step of performing, on the optical resin wafer precursor, at least one type of processing selected from the group consisting of notch processing, burr processing, beveling processing, cutting processing, grinding processing, polishing processing, and heat treatment to obtain an optical resin wafer.

9. The method for manufacturing an optical resin wafer according to Claim 1,
wherein the optical resin wafer contains at least one selected from the group consisting of a (thio)urethane-based optical resin, an epoxy-based optical resin, a polycarbonate-based optical resin, an episulfide-based optical resin, an allyl carbonate-based optical resin, a nylon-based optical resin, a polyamide-based optical resin, and a polyimide-based optical resin.

10. The method for manufacturing an optical resin wafer according to Claim 1,
wherein a refractive index of the optical resin wafer is 1.47 or more.

11. The method for manufacturing an optical resin wafer according to Claim 1,
wherein a curing shrinkage rate A of a curable composition, which is a raw material of the optical resin ingot, calculated by Equation (x) is 15% or less, $A = \left({V}_{0}-{V}_{1}\right) / {V}_{0} \times 100 \left(x\right) ,$
A: curing shrinkage rate [%],
V₀: volume of the curable composition (before curing), and
V₁: volume of the optical resin ingot (after curing).

12. The method for manufacturing an optical resin wafer according to Claim 1,
wherein an average thickness of the optical resin wafer is 0.1 mm to 3.0 mm.

13. The method for manufacturing an optical resin wafer according to Claim 1,
wherein a diameter of the optical resin wafer is 50 mm to 350 mm.

14. The method for manufacturing an optical resin wafer according to Claim 1,
wherein a flatness of the optical resin wafer is 350 µm or less.
